# FASCICULE DE BREVET EUROPEEN

(11) **EP 0 391 295 B1**
(45) Date de publication et mention de la délivrance du brevet: **24.02.1993**
(21) Numéro de dépôt: 90106257.0
(22) Date de dépôt: 02.04.1990
(51) Int. Cl.: B23K 1/012, B23K 3/04, H05K 3/34

(54) **Dispositif de chauffage pour automate**
Erwärmungseinrichtung für Automaten
Heating device for automata

(30) Priorité: 03.04.1989 CH 1206/89; 14.04.1989 FR 8905093
(43) Date de publication de la demande: 10.10.1990
(73) Titulaire: Schunk Automation AG, CH-2555 Brügg (CH)
(72) Inventeur: Rochat, Daniel, CH-2072 Saint-Blaise (CH)
(74) Mandataire: Thérond, Gérard Raymond

(56) Documents cités:
- EP-A- 0 309 665
- DE-C- 932 710

## Description

La présente invention concerne un dispositif de chauffage à flamme vive, destinée à équiper un automate, selon le préambule de la revendication 1.

Un tel dispositif est connu de l'art antérieur.

Il est connu de réaliser des automates de soudage ayant pour fonction d'assurer l'assemblage de pièces, par exemple le soudage de composants électroniques sur circuit imprimé. Dans des dispositifs connus, l'opération de soudage est réalisée au moyen d'une panne mobile, amenée en contact avec la partie à souder, et d'un fil de métal à bas point de fusion, entraîné de manière que son extrémité touche les parties à souder lorsque celles-ci sont chauffées par la panne. De tels dispositifs sont simples de manipulation, car la température de la panne est suffisamment basse pour que le rayonnement qu'elle engendre n'affecte pas l'environnement des parties à souder ou les zones balayées lors du passage d'un point de travail à un autre. La qualité de soudure obtenue avec un tel dispositif est malheureusement inférieure à celle que permet l'utilisation d'un chalumeau à flamme vive. Ceci est dû au fait que le chalumeau permet d'atteindre des températures supérieures à celles obtenues au moyen d'une panne, et par là d'obtenir une soudure plus liquide, d'où une meilleure qualité de la liaison.

On connaît également des têtes de soudage, destinées à être monter sur un automate et munies d'un chalumeau, permettant de souder à flamme vive. Ce type de dispositif présente toutefois un inconvénient rendant leur usage délicat. En effet, la température du gaz enflammé est très élevée. Elle peut atteindre 2700°C. Le programmeur de l'automate doit donc prévoir des déplacements de la tête de manière que la flamme ne puisse détruire, voire enflammer l'une ou l'autre pièce se trouvant sur la table de travail. Il est ainsi nécessaire de beaucoup éloigner la flamme de la surface de travail, lors d'un déplacement d'un point de travail à un autre. Il en résulte une augmentation sensible du temps nécessaire pour effectuer une opération.

Il serait possible d'envisager de réduire la flamme voire même de l'éteindre avant les déplacements de la tête. Il faut malheureusement quelque quinze secondes pour que la flamme soit stable après allumage ou forte modification de son intensité. Il en résulte donc là aussi une augmentation du temps de travail.

Le but de la présente invention est de permettre l'utilisation d'une flamme vive dans les opérations de chauffage sans devoir pour autant ralentir la vitesse de travail.

A cet effet, la présente invention a pour objet un dispositif de chauffage à flamme vive pour équiper un automate comportant un corps, destiné à être fixé sur l'automate, un support monté sur le corps et un chalumeau solidaire du support. Elle est caractérisée en ce qu'il comporte en outre un organe de liaison pour assurer la mobilité du support sur le corps, et une enceinte de confinement, et en ce que le support et le chalumeau peuvent occuper une première position dans laquelle la flamme associée au chalumeau est susceptible d'effectuer une opération de chauffage, et une deuxième position, de repos, dans laquelle la flamme est confinée dans l'enceinte.

Grâce à ces caractéristiques, le dispositif de chauffage peut être déplacé d'un point à un autre sans risque de détérioration.

L'invention sera mieux comprise à la lecture de la description qui va suivre, d'un mode de réalisation fait en référence au dessin, dans lequel :
- la figure 1 est une vue d'ensemble d'une tête de soudage selon l'invention ; et
- les figures 2 et 3 montrent sous deux angles différents le support et le chalumeau équipant la tête de la figure 1.

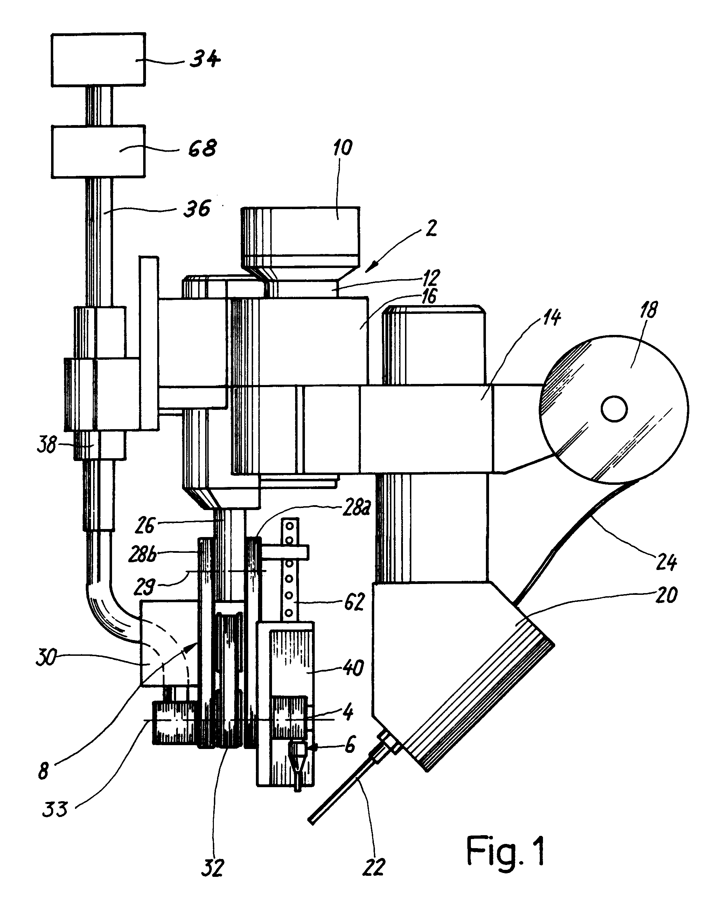

La tête de soudage représentée à la figure 1 comporte un corps 2, un support 4, un chalumeau 6 monté sur le support 4 et des organes de liaison 8 assurant la mobilité du chalumeau 6 et du support 4.

Plus précisément le corps 2 est formé d'une flasque de montage 10, destinée à assurer le montage de la tête sur un automate, d'une tige 12 solidaire de la flasque 10 et de deux bâtis 14 et 16 montés sur la tige 12. Le bâti 14 porte une bobine 18 et un dérouleur 20, se terminant par un tube 22. La bobine 18 porte un fil de métal à bas point de fusion 24, engagé dans le dérouleur 20 et sortant de l'extrémité libre du tube 22. Le bâti 16 porte les organes de liaison 8. Ceux-ci comprennent un pied 26, deux bras 28a et 28b montés en parallèle, mobiles en rotation sur ce pied 26 autour d'un axe 29, un moteur pneumatique 30 et une transmission à courroie 32 entraînée par le moteur 30. Le support 4 et le chalumeau 6 sont portés par l'extrémité des bras 28a et 28b mobiles en rotation autour d'un axe horizontal 33. Le chalumeau 6 est alimenté au moyen d'un générateur 34 par l'intermédiaire de tuyaux 36 et au travers d'un dispositif 38 anti-retour de flamme. Le bras 28a porte en outre un écran 40 dont la fonction sera précisée ultérieurement.

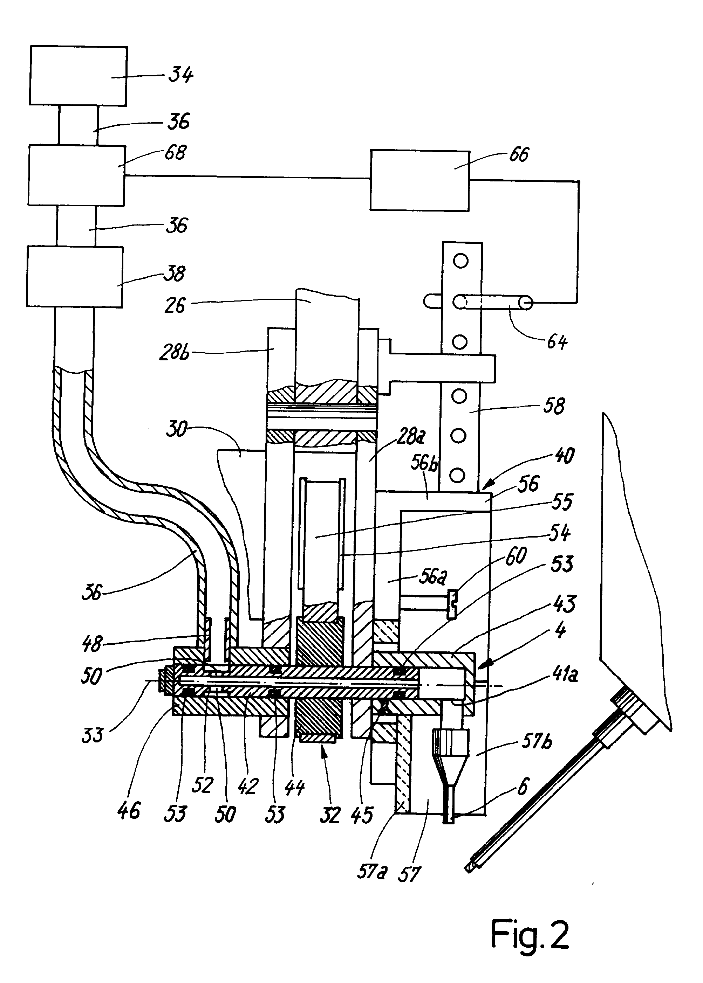

Sur la figure 2, on peut voir plus en détail le pied 26, les bras 28a, 28b et les pièces qui leurs sont solidaires. De manière plus précise, on constate que le support 4 comporte un tube 42 et une douille 43 enfilée à l'une des extrémités du tube 42 et portant le chalumeau 6. Le tube 42 est monté pivotant dans les bras 28a et 28b. Une poulie 44, intercalée entre ces derniers est solidaire du tube 42. La douille 43 est fixée au tube 42 au moyen d'une vis de serrage 45. Une pièce 46, solidaire du bras 28b, porte un raccord 48 autour duquel le tuyau 36 est enfilé. Le tube 42 comporte des ouvertures 50 pratiquées dans la paroi du tube, dans une zone munie d'une gorge annulaire 52. L'extrémité intérieure du raccord 48 est ouverte sur la gorge 52.

Le tube 42 comporte en outre des rainures placées de part et d'autre de la gorge 52 ainsi qu'à l'extrémité se trouvant à l'intérieur de la douille 43, à l'intérieur desquelles sont logés des joints d'étanchéité 53. De la sorte, le gaz, amené au moyen des tuyaux 36, pénètre dans le raccord 48 puis au travers des ouvertures 50 à l'intérieur du tube 42, pour être amené au chalumeau 6. Les joints 53 permettent d'éviter des fuites de gaz.

Le chalumeau 6 peut être déplacé en rotation autour de l'axe 33 au moyen du moteur pneumatique 30 fixé sur le bras 28b. L'arbre du moteur 30 porte à cet effet une poulie 54 reliée à la poulie 44 au moyen d'une courroie 55, les poulies 44 et 54 et la courroie 55 formant ensemble la transmission 32.

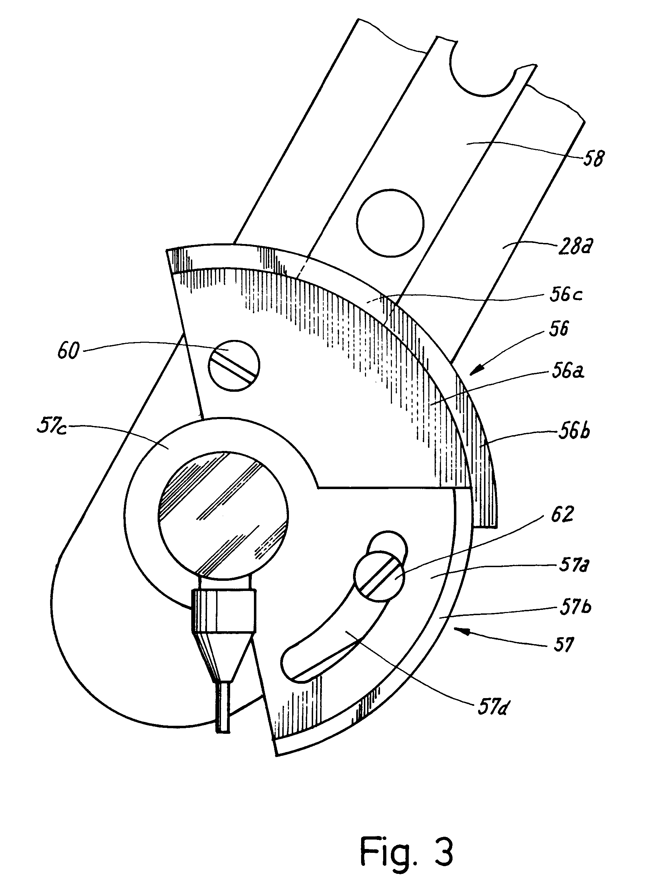

Comme cela a été dit ci-dessus, l'écran 40 est fixé au bras 28a. Il est avantageusement en céramique, par exemple du type Macor TN 14 de la maison Fiber Optic à Spreitenbach, (Suisse). Cet écran comporte plus précisément trois pièces distinctes, portant les références 56, 57 et 58 (figures 2 et 3). La pièce 56 a la forme d'un secteur de cercle définissant une paroi plane 56a dont la périphérie circulaire est solidaire d'une paroi 56b en secteur d'anneau. L'ouverture des secteurs est de 90° environ. La paroi plane 56a est fixée sur le bras 28a au moyen d'une vis 60 dont la tête, allongée, forme butée pour le chalumeau. La paroi 56b est percée d'un trou 56c dont la fonction sera précisée ci-après.

La pièce 57 a la forme d'un secteur de cercle définissant une paroi plane 57a dont la périphérie circulaire est solidaire d'une paroi 57b en secteur d'anneau alors que la partie voisine du centre est formée d'une partie annulaire 57c entourant la douille 43. La paroi 57a comporte une gorge 57d en secteur annulaire à l'intérieur de laquelle est engagée une vis 62 vissée dans un taraudage du bras 28a.

La pièce 58 est formée d'un tube dont les parois sont perforées. Elle est engagée dans le trou 56c et orientée vers l'axe du tube 42.

Une sonde thermique 64 est engagée dans deux trous que comporte l'extrémité de la pièce 58 la plus éloignée de l'axe du tube 42. Elle est reliée à un circuit de sécurité schématiquement représenté en 66, commandant une vanne de sécurité 68 susceptible d'interrompre l'alimentation en gaz du chalumeau 6.

Le chalumeau est avantageusement alimenté au moyen d'un générateur de gaz de type de Spirflame fabriqué par la société Spirig à Rapperswil (Suisse).

Pour utiliser un automate muni d'une telle tête de soudage, la tête est tout d'abord montée sur l'automate. Le tuyau d'alimentation de gaz est relié au générateur de type Spirflame et les cordons électriques de commande du dérouleur de fil branchés au dispositif de commande associé à la commande de l'automate. La position angulaire du chalumeau est ensuite ajustée de manière que la flamme soit projetée dans la direction souhaitée, et l'intensité du flux de gaz réglée pour obtenir une flamme de longueur convenable. La position de repos du chalumeau est définie par la tête de la vis 60 qui positionne le chalumeau de manière que la flamme soit projetée à l'intérieur de la pièce 58. Le chalumeau est mis en position de travail pour l'allumage de la flamme, puis est ramené en position de repos. L'automate est ensuite mis en marche. Au départ, la flamme est donc confinée à l'intérieur de la pièce 58 et chauffe la sonde 64. Il en résulte que le circuit de sécurité 66 garantit le maintien de l'alimentation en gaz du chalumeau. Lorsque l'automate arrive en un point où il doit souder, le circuit de sécurité 66 est neutralisé et le chalumeau est rapidement amené en position de travail. La flamme chauffe alors les pièces à souder puis est retirée. L'extrémité du fil 24 est ensuite amenée en contact avec les pièces à souder, dont la température fait fondre le fil qui assure ainsi l'assemblage des pièces. Dès que le circuit de sécurité est réactivé, la flamme est ramenée en position de repos. L'automate est ensuite déplacé jusqu'à une nouvelle position de travail, sans risque d'abîmer l'un ou l'autre composant placé sur son support.

Il est bien entendu que les ordres de déplacement de la tête et de neutralisation-activation du circuit de sécurité, permettant de détecter la présence d'une flamme sont donnés par le programme de commande de l'automate.

Si pour une raison ou pour une autre, la flamme s'éteignait, la sonde 64 ne serait plus chauffée lorsque le chalumeau est en position de repos. Il en résulterait alors l'interruption de l'alimentation en gaz et l'arrêt de la machine. Il est de la sorte possible de prendre immédiatement des mesures et d'éliminer la pièce mal soudée. Le fait que l'alimentation ne soit pas immédiatement interrompue au moment où la flamme est soufflée ne représente pas un risque d'explosion, car le volume de gaz émis est extrêmement faible, typiquement compris entre 100 et 500 litres de gaz par heure à la pression ordinaire. C'est la raison pour laquelle il est possible de se contenter de contrôler la présence de la flamme en position de repos seulement.

Grâce à la structure telle que définie ci-dessus, il est possible de réaliser un automate à tête de chauffage à flamme vive, dans lequel la flamme peut rester de même intensité, sans risque pour autant d'abîmer les pièces se trouvant dans son voisinage. De la sorte, la flamme reste parfaitement stable et la qualité de soudage est ainsi assurée, sans pour autant perdre de temps.

La tête de soudage telle que décrite ci-dessus est susceptible des variantes suivantes. Il est ainsi possible de remplacer le moteur pneumatique par un moteur électrique indexé permettant une orientation quelconque du chalumeau 6. Il est aussi envisageable de commander électriquement le mouvement de la pièce 57, en synchronisme avec la position de travail programmée pour le chalumeau 6.

En plus des opérations de soudage, une telle tête permet par exemple de dénuder des fils juste avant leur mise en place, ainsi que de nombreuses autres opérations nécessitant des températures élevées.

Le chalumeau peut être monté sur une tête, conjointement avec d'autres outils, comme par exemple un fer à souder à panne. Dans ce cas, le chalumeau a pour fonction essentielle de dénuder les fils alors que la panne est utilisée pour des opérations de soudage.

## Revendications

1. Dispositif de chauffage à flamme vive, pour équiper un automate, comportant un corps (2), destiné à être fixé sur l'automate, un support (4) monté sur le corps (2) et un chalumeau (6) solidaire du support (4), caractérisé en ce qu'il comporte en outre un organe de liaison (8) pour assurer la mobilité du support (4) sur ledit corps (2), et une enceinte de confinement (58), ledit support (4) et ledit chalumeau (6) pouvant occuper une première position dans laquelle la flamme associée au chalumeau (6) est susceptible d'effectuer une opération de chauffage, et une deuxième position, de repos, et dans laquelle ladite flamme est confinée dans ladite enceinte (58).

2. Tête de soudage selon la revendication 1, caractérisée en ce que ladite enceinte (58) est solidaire d'une sonde thermique commandant un circuit de verrouillage de l'alimentation en gaz du chalumeau.

3. Tête de soudage selon la revendication 1 ou 2, caractérisée en ce que l'organe de liaison est agencé pour permettre une rotation du chalumeau autour d'un axe horizontal perpendiculaire à l'axe du chalumeau.

4. Tête de soudage selon l'une des revendications 1 à 3, caractérisée en ce qu'elle comporte en outre un écran masquant la flamme de la première à la deuxième position.

## Claims

1. Flame gas heating device, for use with a robot, comprising a body (2) adapted to be fixed to the robot, a support (4) mounted on the body (2) and a welding torch (6) integral with the support (4), characterized in that it further comprises a connecting part (8) to ensure the mobility of the support (4) on said body (2) and a confinement enclosure (58), said support (4) and said welding torch (6) being able to occupy a first position in which the flame associated with the welding torch (6) is capable of carrying out a heating operation, and a second rest position, and in which said flame is confined within said enclosure (58).

2. Welding head according to claim 1, characterized in that said enclosure (58) is integral with a heat probe controlling a shut-off circuit for the gas supply to the welding torch.

3. Welding head according to claim 1 or 2, characterized in that the connecting part is adapted to enable the welding torch to rotate about a horizontal axis perpendicular to the axis of the welding torch.

4. Welding head according to one of claims 1 to 3, characterized in that it further comprises a screen masking the flame during passage from the first to the second position.

## Patentansprüche

1. Erwärmungsvorrichtung mit lebendiger Flamme zur Ausrüstung eines Automaten, umfassend einen Körper (2), der dazu bestimmt ist, an dem Automaten befestigt zu werden, einen an dem Körper (2) montierten Träger (4) und einen fest an dem Träger (4) angeordneten Brenner (6), dadurch gekennzeichnet, daß sie desweiteren ein Verbindungsorgan (8) zum Sicherstellen der Mobilität des Trägers (4) gegenüber dem besagten Körper (2) und einen Einschließungsraum (58) umfaßt, wobei der besagte Träger (4) und der besagte Brenner (6) eine erste Position, in der die vom Brenner (6) erzeugte Flamme in der Lage ist, einen Erwärmungsvorgang zu bewirken, und eine zweite Ruheposition einnehmen können, in der die besagte Flamme in dem Raum (58) eingeschlossen ist.

2. Schweißkopf gemäß Anspruch 1, dadurch gekennzeichnet, daß der besagte Raum (58) fest mit einer thermischen Sonde ist, die einen Schaltkreis zum Blockieren der Gasversorgung des Brenners steuert.

3. Schweißkopf gemäß Anspruch 1 oder 2, dadurch gekennzeichnet, daß das Verbindungsorgan zum Erlauben einer Rotation des Brenners um eine horizontale Achse senkrecht zur Brennerachse angetrieben ist.

4. Schweißkopf gemäß einem der Ansprüche 1 bis 3, dadurch gekennzeichnet, daß er desweiteren eine die Flamme von der ersten zur zweiten Position abschirmende Abschirmung umfaßt.
